# EUROPEAN PATENT SPECIFICATION

(11) **EP 3 088 167 B1**
(45) Date of publication and mention of the grant of the patent: **06.03.2019**
(21) Application number: 14885266.8
(22) Date of filing: 14.03.2014
(51) Int. Cl.: B29D 30/30, B29D 30/14, B29D 30/28

(54) **STITCHING DEVICE AND STITCHING METHOD**
HEFTVORRICHTUNG UND HEFTVERFAHREN
DISPOSITIF ET PROCÉDÉ DE ROULETAGE

(43) Date of publication of application: 02.11.2016
(73) Proprietor: Bridgestone Corporation, Tokyo 104-8340 (JP)
(72) Inventor: YOSHIDA, Itaru, Kodaira-shi Tokyo 187-8531 (JP)
(74) Representative: Oxley, Robin John George
(86) International application number: PCT/JP2014/001474
(87) International publication number: WO 2015/136576

(56) References cited:
- DE-A1- 1 579 161
- DE-A1- 2 019 989
- JP-A- H0 994 892
- JP-A- H09 117 969
- JP-A- 2013 039 695
- JP-A- 2014 012 342
- JP-U- H0 342 635
- US-A- 1 718 633
- US-A- 3 850 728
- US-A- 5 074 949
- US-A- 5 693 176

## Description

### TECHNICAL FIELD

The present invention relates to a stitching device and a stitching method.

### BACKGROUND ART

There has been conventionally proposed a stitching device for pressure-attaching a belt-like tire structural member such as a tread band on a tire intermediate member or assembly fixed on a tire building drum in a state where the tire intermediate member is being rotated (refer to PTL 1, for example). In a case where a pre-built turned-up portion is pressure-attached on a side surface of a tire intermediate member, in particular, it is preferable to press a stitching roller against a sidewall portion as the side surface of the tire intermediate member at an angle close to 90° so that air remaining inside the belt-like tire structural member is thoroughly purged. A "tire intermediate member" represents a tire intermediate member or assembly built by sequentially attaching unvulcanized tire structural members in the present disclosure.

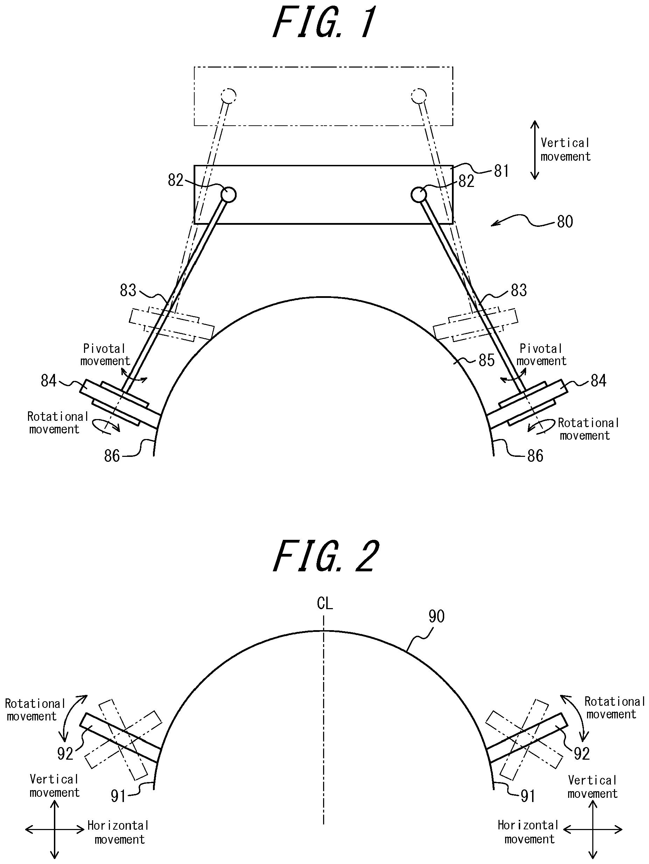

In this connection, there has been proposed, as shown in FIG. 1, a stitching device 80 having a support portion 81 movable in a vertical direction, an arm 83 linked to a fulcrum portion 82 of the support portion 81 so as to be pivotally movable, and a stitching roller 84 provided at the tip end of the arm 83.

However, the stitching device 80 has a problem in that an angle at which the stitching roller 84 is in contact with a sidewall portion 86 of the tire intermediate member 85 is far different from 90° when the support portion 81 has moved away in a vertically upper direction, i.e. when the support portion 81 has receded from the tire intermediate member 85, as shown with two-dotted chain lines in FIG. 1.
In view of this problem, there has been proposed a technique of providing a stitching portion 92 on respective sides in the tire width direction of the tire equatorial plane CL as the center of a tire intermediate member 90 such that the stitching portion 92 can make vertical, horizontal, and rotational movements each independently, thereby ensuring the stitching portion 92 to be orthogonally pressed against a sidewall portion 91 of the tire intermediate member 90.
Attention is also drawn to the disclosure of US5693176.

### CITATION LIST

### Patent Literature

PTL 1: JP-A 58-042444

### SUMMARY

However, such a device as shown in FIG. 2 requires a complicated mechanism for enabling the stitching portion 92 to make movements in various directions, thereby inevitably increasing the size and the manufacturing cost of the device. Accordingly, there has been a demand for a simpler technique than the conventional technique shown in FIG. 2.

The present disclosure has been contrived to solve the aforementioned problems and an object thereof is to provide a stitching device and a stitching method enabling a stitching jig to be orthogonally pressed against a predetermined surface portion of a tire intermediate member or assembly.

The inventors of our device and method made a keen study to solve the aforementioned problems and, as a result, newly discovered that the object described above can be achieved by uniquely changing the position of a fulcrum portion of a support portion in a horizontal direction (i.e. the tire width direction of a tire intermediate member) when the support portion is moved in the vertical direction (i.e. the tire radial direction of the tire intermediate member), thereby completing our device and method.

The primary features of our device and method are as follows.
Our stitching device for pressure-attaching a tire structural member on a tire intermediate member is a device as claimed in claim 1.
"One side" and "the other side" of the arm basically represent one end and the other end of the arm but may also represent portions longitudinally inner than these ends, respectively, in the present disclosure.

### [DELETED]

Our stitching method is a method as claimed in claim 6.
The "stitching operation" may represent an operation of setting a tire intermediate member, as well as an operation of stitching the tire intermediate member, in the present disclosure.

### [DELETED]

According to our device and method, it is possible to provide a stitching device and a stitching method enabling a stitching jig to be orthogonally pressed against a predetermined surface portion of a tire intermediate member.

### BRIEF DESCRIPTION OF THE DRAWINGS

In the accompanying drawings, wherein:
FIG. 1 is a view showing an example of a conventional stitching device;
FIG. 2 is a view showing another example of a conventional stitching device;
FIG. 3 is a view showing a stitching device according to a first embodiment, which is not according to the present invention;
FIG. 4 is a view showing a stitching device according to a second embodiment of our stitching device;
FIG. 5 is a view showing a stitching device according to a third embodiment of our stitching device;
FIG. 6 is a view showing an example of our stitching device in which fulcrum portions thereof are capable of moving on different shafts, respectively; and
FIG. 7 is a view for explaining an operation of a displacement imparting portion of our stitching device.

### DETAILED DESCRIPTION

Embodiments of our stitching device and stitching method will be demonstratively described in detail hereinafter with reference to the drawings.

### <Stitching device>

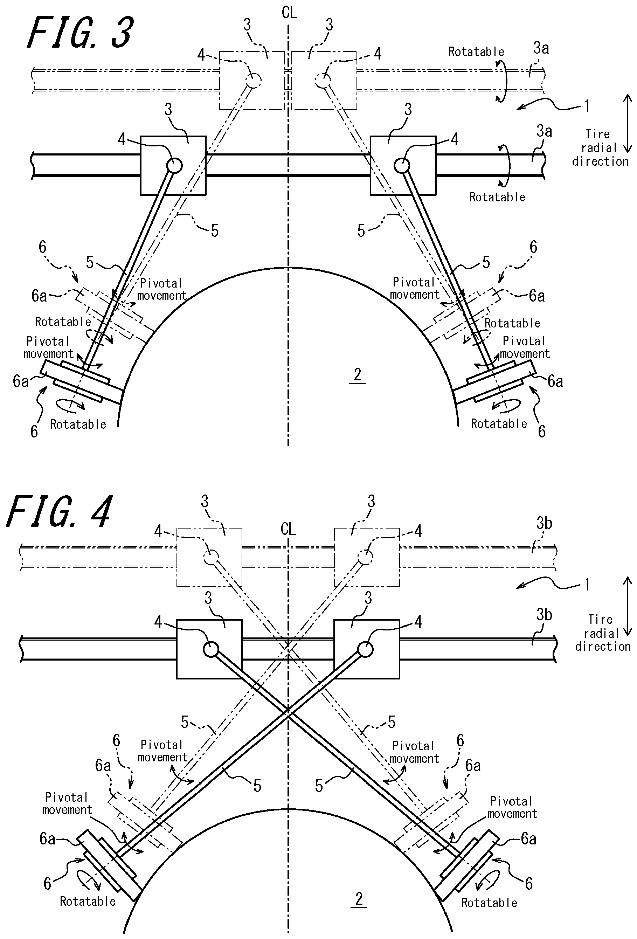

FIG. 3 is a view showing a stitching device according to a first embodiment, which is not according to the present invention but which is useful for understanding the present invention. This stitching device is structured to pressure-attach a tire structural member on a tire intermediate member. FIG. 3 is a front view of the stitching device in a stitching operation (a side view of the tire intermediate member).

The stitching device 1 has: support portions 3 capable of moving in the tire radial direction of a tire intermediate member or assembly 2 in a stitching operation; and fulcrum portions 4 respectively provided in the support portions 3, as shown in FIG. 3. The stitching device 1 is disposed on the outer side in the tire radial direction of the tire intermediate member 2 to be stitched, so that the support portions 3 (together with a shaft 3a) are capable of making reciprocal movements in the tire radial direction in that state, in an example shown in FIG. 3. The stitching device 1 further has totally two fulcrum portions 4 (one for each support portion 3) in the example shown in FIG. 3. One fulcrum portion 4 is positioned on each side with respect to the tire equatorial plane CL of the tire intermediate member 2 in the shown example. The support portions 3 are connected with the shaft 3a which in the shown example extends in the tire width direction of the tire intermediate member 2 and is rotatable around the extending direction thereof as a rotation axis.

The stitching device 1 further has: arms 5 each connected at one side thereof with the corresponding fulcrum portion 4 to be pivotally movable around the fulcrum portion 4 (in a side view of FIG. 3, i.e. on a plane of the drawing sheet of FIG. 3); and stitching portions 6 each having a stitching jig 6a (a rotatable stitching roller in the example shown in FIG. 3) and connected with the other side of each arm, as shown in FIG. 3. A nonrotatable stitching roller or any of suitable stitching rollers of other known types other than a rotatable stitching roller may be used as the stitching jig. The stitching roller 6a is structured to be rotatable around the extending direction of the arm 5 as the rotation axis and carries out a stitching operation by pressure-attaching, while the roller 6a is being rotated, a tire structural member on the tire intermediate member 2 rotating in the tire circumferential direction.

The stitching device 1 according to the first embodiment is characteristically structured such that the fulcrum portions 4 are each movable in the tire width direction of the tire intermediate member 2 in a stitching operation.
The support portions 3 including the fulcrum portions 4 are adapted to move on the shaft 3a, as the shaft 3a is rotated around the extending direction thereof as the rotation axis, in the example shown in FIG. 3. A method for making the fulcrum portions 4 movable is not limited to the aforementioned example and examples of the method include: forming a slide groove in the shaft 3a and providing each of the support portions 3 with a sliding mechanism as a protruding portion engageable with the slide groove such that the fulcrum portions 4 can slide on the shaft 3a in the tire width direction of the tire intermediate member 2; fixing each of the support portions 3 and making the fulcrum portions 4 movable in the tire width direction of the tire intermediate member 2 relative to the fixed support portions 3; and any other known techniques of making the fulcrum portions 4 movable in the tire width direction of the tire intermediate member 2 in a stitching operation.
An effect of the first embodiment will be described hereinafter.

According to the stitching device 1 of the first embodiment, it is possible, when the support portions 3 are moved on the outer side in the tire radial direction of the tire intermediate member 2, to ensure a relatively large inclination angle of each of the arms 5 with respect to the tire radial direction by moving the fulcrum portions 4 toward the inner side in the tire width direction of the tire intermediate member 2, as shown with two-dotted chain lines in FIG. 3, thereby successfully pressing the stitching roller 6a against a surface of a sidewall portion of the tire intermediate member 2 at an angle close to 90° and effectively pressure-attaching a tire structural member on the tire intermediate member 2. That is, according to the first embodiment, it is possible to effectively pressure-attach a tire structural member on the tire intermediate member by a simple technique of just moving the fulcrum portions 4 in the tire width direction of the tire intermediate member 2.
Further, according to the present embodiment, since the fulcrum portions 4 are movable, it is possible to first set according to the tire size each of the stitching rollers 6a at the initial position thereof where the stitching roller 6a is in contact with the tire intermediate member 2 at an optimum angle and then start a stitching operation.

FIG. 4 is a view showing a stitching device according to a second embodiment of our stitching device. This stitching device is structured to pressure-attach a tire structural member on a tire intermediate member. FIG. 4 is a front view of the stitching device in a stitching operation (a side view of the tire intermediate member).

Similar to the stitching device of the first embodiment shown in FIG. 3, the stitching device 1 shown in FIG. 4 has: support portions 3 capable of moving in the tire radial direction of a tire intermediate member or assembly 2 in a stitching operation; and fulcrum portions 4 respectively provided in the support portions 3. The stitching device 1 is disposed on the outer side in the tire radial direction of the tire intermediate member 2 to stitched, so that the support portions 3 are capable of making reciprocal movements in the tire radial direction in that state, in an example shown in FIG. 4. The stitching device 1 further has totally two fulcrum portions 4 (one for each support portion 3) in the example shown in FIG. 4. One fulcrum portion 4 is positioned on each side with respect to the tire equatorial plane CL of the tire intermediate member 2 in the shown example. The support portions 3 are connected with a shaft 3b.

Similar to the first embodiment, the stitching device 1 further has: arms 5 each connected at one side thereof with the corresponding fulcrum portion 4 to be pivotally movable around the fulcrum portion 4 (in a side view of FIG. 4, i.e. on a plane of the drawing sheet of FIG. 4); and stitching portions 6 each having a stitching roller 6a and connected with the other side of each arm, as shown in FIG. 4. The stitching roller 6a is structured to be rotatable around the extending direction of the arm 5 as the rotation axis and carries out a stitching operation by pressure-attaching, while the roller 6a is being rotated, a tire structural member on the tire intermediate member 2 rotating in the tire circumferential direction.

The stitching device 1 according to the second embodiment is characteristically structured such that one fulcrum portion 4 is positioned on one side with respect to the tire equatorial plane CL of the tire intermediate member 2 and the corresponding stitching portion 6 is positioned on the other side with respect to the tire equatorial plane CL (and the other fulcrum portion 4 is positioned on the other side, with the corresponding stitching portion 6 positioned on the one side) in a stitching operation. In other words, the stitching device 1 is structured such that the two arms 5 thereof intersect each other.
An effect of the second embodiment will be described hereinafter.

According to the stitching device 1 of the second embodiment, it is possible (when the support portions 3 are moved on the outer side in the tire radial direction of the tire intermediate member 2) to ensure a relatively large inclination angle of each of the arms 5 with respect to the tire radial direction because the fulcrum portion 4 and the stitching portion 6 connected therewith via the arm 5 are situated on one side and the other side with respect to the tire equatorial plane CL, respectively, thereby successfully pressing the stitching roller 6a against a surface of the tire intermediate member 2 at an angle close to 90° and effectively pressure-attaching a tire structural member on the tire intermediate member 2. Further, according to the second embodiment, it is easy to bring the stitching roller 6a to satisfactory contact with a sidewall portion of the tire intermediate member 2 because the length of the arm 5 measured from the fulcrum portion 4 to the stitching portion 6 is relatively long. That is, according to the second embodiment, it is possible to effectively pressure-attach a tire structural member on the tire intermediate member by a simple technique of just positioning each of the fulcrum portions 4 as described above.

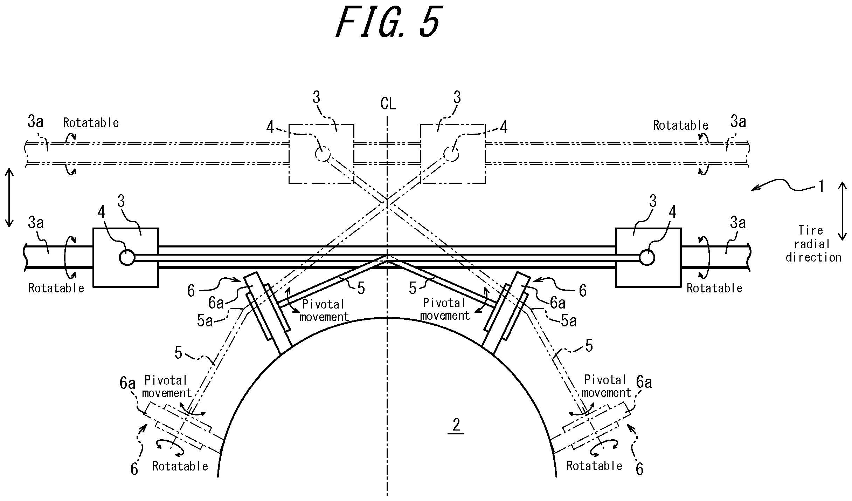

FIG. 5 is a view showing a stitching device according to a third embodiment of our stitching device. This stitching device is structured to pressure-attach a tire structural member on a tire intermediate member. FIG. 5 is a front view of the stitching device in a stitching operation (a side view of the tire intermediate member).

Similar to the stitching device of the first embodiment shown in FIG. 3, the stitching device 1 of the third embodiment has: support portions 3 capable of moving in the tire radial direction of a tire intermediate member or assembly 2 in a stitching operation; and fulcrum portions 4 respectively provided in the support portions 3. The stitching device 1 is disposed on the outer side in the tire radial direction of the tire intermediate member 2 to be stitched, so that the support portions 3 are capable of making reciprocal movements in the tire radial direction in that state, in an example shown in FIG. 5. The stitching device 1 further has totally two fulcrum portions 4 (one for each support portion 3) in the example shown in FIG. 5. One fulcrum portion 4 is positioned on each side with respect to the tire equatorial plane CL of the tire intermediate member 2 in the shown example. The support portions 3 are connected with a shaft 3a capable of rotating around a rotation axis extending in the same direction of the circumferential direction of the tire intermediate member 2.

Similar to the first and second embodiments, the stitching device 1 further has: arms 5 each connected at one side thereof with the corresponding fulcrum portion 4 to be pivotally movable around the fulcrum portion 4 (in a side view of FIG. 5, i.e. on a plane of the drawing sheet of FIG. 5); and stitching portions 6 each having a stitching roller 6a and connected with the other side of each arm, as shown in FIG. 5. The stitching roller 6a is structured to be rotatable around the extending direction of the arm 5 as the rotation axis and carries out a stitching operation by pressure-attaching, while the roller 6a is being rotated, a tire structural member on the tire intermediate member 2 rotating in the tire circumferential direction.

Further, the stitching device 1 according to the third embodiment is structured such that one fulcrum portion 4 is positioned on one side with respect to the tire equatorial plane CL of the tire intermediate member 2 and the corresponding stitching portion 6 thereof is positioned on the other side with respect to the tire equatorial plane CL (and the other fulcrum portion 4 is positioned on the other side, with the corresponding stitching portion 6 thereof positioned on the one side) in a stitching operation, as shown in FIG. 5. In other words, the stitching device 1 is structured such that the two arms 5 thereof intersect each other.

The stitching device 1 according to the third embodiment shown in FIG. 5 is characteristically structured such that i) the fulcrum portions 4 are each movable in the tire width direction of the tire intermediate member 2 in a stitching operation and ii) one fulcrum portion 4 is positioned on one side with respect to the tire equatorial plane CL of the tire intermediate member 2 and the corresponding stitching portion 6 thereof is positioned on the other side with respect to the tire equatorial plane CL (and the other fulcrum portion 4 is positioned on the other side, with the corresponding stitching portion 6 thereof positioned on the one side) in a stitching operation.
An effect of the third embodiment will be described hereinafter.

According to the stitching device 1 of the third embodiment, it is possible to ensure a relatively large inclination angle of each of the arms 5 with respect to the tire radial direction because i) the fulcrum portion 4 and the stitching roller 6a connected therewith via the arm 5 are situated on one side and the other side of the tire equatorial plane CL, respectively, as in the second embodiment and ii) the fulcrum portion 4 is movable in the tire width direction of the tire intermediate member 2, as in the first embodiment. As a result, it is possible to press the stitching roller 6a against a surface of the tire intermediate member 2 at an angle further close to 90° according to the third embodiment. Further, as in the first embodiment, it is possible to first set according to the tire size each of the stitching rollers 6a at the initial position thereof where the stitching roller 6a is in contact with the tire intermediate member 2 at an optimum angle and then start a stitching operation because the fulcrum portions 4 are movable. Yet further, as in the second embodiment, it is easy to bring the stitching roller 6a to satisfactory contact with a sidewall portion of the tire intermediate member 2 because the length of the arm 5 measured from the fulcrum portion 4 to the stitching portion 6 is relatively long.

Alternatively, both of each fulcrum portion 4 movable in the tire width direction of the tire intermediate member 2 and the stitching portion 6 connected with the fulcrum portion 4 via the arm 5 may be situated on the same side with respect to the tire equatorial plane CL, as in the first embodiment shown in FIG. 3, in the present embodiment. In this case, the length of each arm 5 should be adjusted such that the corresponding stitching roller 6a can be brought into contact in a satisfactory manner with a portion ranging from the radially innermost side to the radially outermost side of a sidewall portion of the tire intermediate member 2.

In the first and the third embodiments shown in FIGS. 3 and 5, respectively, the two fulcrum portions 4 provided on the same shaft (the shaft 3a) are each movable on the shaft 3a and adapted to be moved synchronously and symmetrically with respect to the tire equatorial plane CL in the tire width direction of the tire intermediate member 2 by rotation of the shaft 3a. As a result, it is possible to make the fulcrum portions 4 movable in the tire width direction of the tire intermediate member 2 by a simple technique.

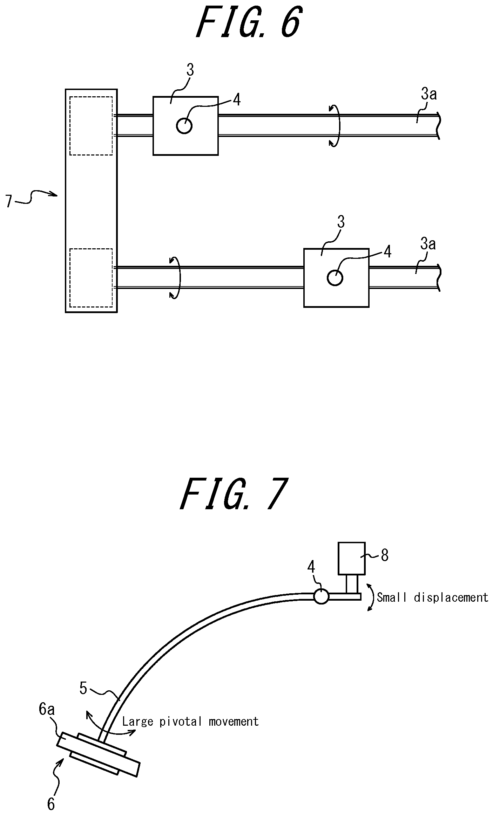

As another alternative, it is acceptable to provide the two fulcrum portions 4 formed in the two support portions 3a, on different shafts (the shafts 3a), respectively, as shown in FIG. 6, such that the respective fulcrum portions 4 can be moved on the different shafts (the shafts 3a), respectively. This structure allows the fulcrum portions 4 to move in a wider range in the tire width direction of the tire intermediate member 2 than the structure using a single shaft.
In this case, it is preferable to make rotations of the two shafts 3a synchronous with each other by using an endless rotating belt 7, as shown in FIG. 6, because then the two fulcrum portions 4 can be moved synchronously and symmetrically in the tire width direction of the intermediate member 2. However, the link between the two shafts 3a via the rotating belt 7 may be released so that only one of the arms 5 is moved or a stitching operation is carried out without synchronizing the two stitching portions. Further alternatively, rotations of the two shafts 3a may be made synchronous with each other by using a gear instead of the rotating belt 7.

Our stitching device is preferably structured such that the fulcrum portions 4 can be moved to predetermined tire widthwise positions relative to the tire intermediate member 2 in a predetermined case, to cause the stitching rollers 6a each set at a predetermined position of a surface of a sidewall portion of the tire intermediate member 2, to be pressure-attached against the surface from a direction orthogonal to the surface in a stitching operation.
It is preferable that the fulcrum portions 4 are capable of moving to the predetermined tire widthwise positions relative to the tire intermediate member 2 in a tire having a SUV (sport utility vehicle) size in which a turn-up portion of a sidewall portion is located on the significantly outer side in the tire radial direction, in particular, so that the stitching rollers 6a can be reliably pressure-attached against a surface of a sidewall portion of the tire intermediate member 2 at an angle close to 90° even at a position significantly on the outer side in the tire radial direction of the sidewall therein.

Further, our stitching device is preferably structured such that the fulcrum portions 4 can be fixed at predetermined tire widthwise positions relative to the tire intermediate member 2 in a stitching operation in another predetermined case.
A stitching operation in which the fulcrum portions 4 are fixed and the stitching rollers 6a are pressure-attached against a surface of a sidewall portion of the tire intermediate member 2 at an angle somewhat higher/lower than 90° suffices in a tire having a tire size in which a turn-up portion of a sidewall portion is not so significantly on the outer side in the tire radial direction. This structure allowing the fulcrum portions 4 to be fixed contributes to making the whole stitching operation simple.

Yet further, our stitching device preferably has a displacement imparting portion (a cylinder) 8 for causing the arm 5 to pivot around the fulcrum 4, as shown in FIG. 7. It is preferable that the displacement imparting portion 8 is provided on the opposite side of the stitching portion 6 with respect to the fulcrum portion 4 and that a length measured from the fulcrum portion 4 to the stitching portion 6, of the arm 5, is longer than a length measured from the fulcrum portion 4 to the displacement imparting portion 8, of the arm 5.
Simply imparting one side of the arm 5 with respect to the fulcrum portion 4, with a small displacement, by the displacement imparting portion 8 significantly displaces the other side of the arm 5 due to a moment. That is, it is possible to cause the arm 5 to make a relatively large pivotal movement on the other side thereof by imparting the one side thereof with a relatively small displacement in the pivotal direction.

The arm 5 preferably has a shape curved along the outer contour of the tire intermediate member 2 in a stitching operation.
This structure is preferable because it can avoid occurrence of interference between the tire intermediate member 2 and the arm 5.
Examples of a "shape curved along the outer contour of the tire intermediate member 2" of the arm 5 include various shapes which can avoid occurrence of interference between the tire intermediate member 2 and the arm 5, such as a curved shape as shown in FIG. 7, a bent shape having a bent point 5a as shown in FIG. 5, an arcuate shape, a protruding shape, and the like.

The length of the arm 5 is preferably a length allowing the stitching portion 6 to reach the innermost position in the tire radial direction of a portion to be stitched, of the tire intermediate member 2, when the support member 3 is situated at the innermost position thereof in the tire radial direction with respect to the tire intermediate member 2 in the stitching device 1. This structure allows the fulcrum portions 4 to be moved in the tire width direction of the tire intermediate member 2 by a simple technique using only one or two shafts.
The length of the arm 5 is preferably ≤ 2 × the maximum length in the tire width direction of the tire intermediate member 2 in terms of making the stitching device 1 compact.

### <Stitching Method>

First, a stitching method according to a first embodiment, which is not according to the present invention, will be described.

Referring to FIG. 3, the stitching method according to the first embodiment includes: preparing a support portion 3 capable of moving in the radial direction of a tire intermediate member 2, a fulcrum portion 4 provided in the support portion 3, an arm 5 connected at one side thereof with the fulcrum portion 4 to be pivotally movable around the fulcrum portion 4, and a stitching portion 6 having a stitching roller 6a and connected with the other side of the arm 5; and pressure-attaching a tire structural member on the tire intermediate member 2 by the stitching roller 6a, while moving the support portion 3 in the radial direction of the tire intermediate member 2 in a stitching operation.

In this connection, the method further includes moving the fulcrum portion 4 in the tire width direction of the tire intermediate member 2 in the stitching operation, with moving the support portion 3 in the radial direction of the tire intermediate member 2.

Specifically, the fulcrum portion 4 (together with the support portion 3 in an example shown in FIG. 3) is made to move on the inner side in the tire width direction of the tire intermediate member 2, as the support member 3 is moved on the outer side in the tire radial direction of the tire intermediate member 2, as shown with the solid lines and the two-dotted chain lines in FIG. 3.

According to the stitching method of the first embodiment, it is possible (when the support portions 3 are moved on the outer side in the tire radial direction of the tire intermediate member 2) to ensure a relatively large inclination angle of each of the arms 5 with respect to the tire radial direction, thereby successfully pressing the stitching roller 6a against a surface of a sidewall portion of the tire intermediate member 2 at an angle close to 90° and effectively pressure-attaching, by rotating the stitching roller 6a, a tire structural member on the tire intermediate member 2 rotating in the tire circumferential direction, as described above in connection with the relevant stitching device. That is, according to the stitching method of the first embodiment, it is possible to effectively pressure-attach a tire structural member on the tire intermediate member by a simple technique of just moving the fulcrum portions 4 in the tire width direction of the tire intermediate member 2.
Further, according to the present embodiment, since the fulcrum portions 4 are movable, it is possible to first set according to the tire size each of the stitching rollers 6a at the initial position thereof where the stitching roller 6a is in contact with the tire intermediate member 2 at an optimum angle and then start a stitching operation.

Next, a stitching method according to a second embodiment of our stitching method will be described.
Referring to FIG. 4, the stitching method according to the second embodiment includes: preparing a support portion 3 capable of moving in the radial direction of a tire intermediate member 2, a fulcrum portion 4 provided in the support portion 3, an arm 5 connected at one side thereof with the fulcrum portion 4 to be pivotally movable around the fulcrum portion 4, and a stitching portion 6 having a stitching roller 6a and connected with the other side of the arm 5; and pressure-attaching a tire structural member on the tire intermediate member 2 by the stitching roller 6a, while moving the support portion 3 in the radial direction of the tire intermediate member 2 in a stitching operation.
In this connection, the method further includes positioning the fulcrum portion 4 to be on one side with respect to the tire equatorial plane CL of the tire intermediate member 2 and the stitching portion 6 to be on the other side with respect to the tire equatorial plane CL in the stitching operation.
According to the stitching method of the second embodiment, it is possible (when the support portions 3 are moved on the outer side in the tire radial direction of the tire intermediate member 2) to ensure a relatively large inclination angle of each of the arms 5 with respect to the tire radial direction because the fulcrum portion 4 and the stitching portion 6 connected therewith via the arm 5 are situated on one side and the other side with respect to the tire equatorial plane CL, respectively, thereby successfully pressing the stitching roller 6a against a surface of the tire intermediate member 2 at an angle close to 90° and effectively pressure-attaching a tire structural member on the tire intermediate member 2. Further, according to the stitching method of the second embodiment, it is easy to bring the stitching roller 6a to satisfactory contact with a sidewall portion of the tire intermediate member 2 because the length of the arm 5 measured from the fulcrum portion 4 to the stitching portion 6 is relatively long. That is, according to the stitching method of the second embodiment, it is possible to effectively pressure-attach a tire structural member on the tire intermediate member by a simple technique of just positioning each of the fulcrum portions 4 as described above.

Next, a stitching method according to a third embodiment of our stitching method will be described.
Referring to FIG. 5, the stitching method according to the third embodiment includes basically the same operations or processes as the first embodiment shown in FIG. 3, except that the method further includes positioning the fulcrum portion 4 to be on one side with respect to the tire equatorial plane CL of the tire intermediate member 2 and the stitching portion 6 to be on the other side with respect to the tire equatorial plane CL in the stitching operation.
On this basis, the method moves the fulcrum portion 4 in the tire width direction of the tire intermediate member 2 in the stitching operation, with moving the support portion 3 in the radial direction of the tire intermediate member 2. Specifically, the fulcrum portion 4 (together with the support portion 3 in an example shown in FIG. 5) is made to move on the inner side in the tire width direction of the tire intermediate member 2, as the support member 3 is moved on the outer side in the tire radial direction of the tire intermediate member 2, as shown with the solid lines and the two-dotted chain lines in FIG. 5.

According to the stitching method of the third embodiment, it is possible to ensure a relatively large inclination angle of each of the arms 5 with respect to the tire radial direction by two superior effects of i) making the fulcrum portion 4 movable in the tire width direction of the tire intermediate member 2 and ii) positioning the fulcrum portion 4 and the stitching portion 6 connected therewith via the arm 5 to be on one side and the other side with respect to the tire equatorial plane CL, respectively, as shown in FIG. 5, thereby successfully pressing the stitching roller 6a against a surface of a sidewall of the tire intermediate member 2 at an angle close to 90°. As a result, it is always possible to press the stitching roller 6a against the tire intermediate member 2 at an angle close to 90° in a portion ranging from the innermost position to the outermost position in the tire radial direction of the tire intermediate member 2 in stitching. Further, it is easy to bring the stitching roller 6a to satisfactory contact with a sidewall portion of the tire intermediate member 2 because the length of the arm 5 measured from the fulcrum portion 4 to the stitching portion 6 is relatively long. Accordingly, it is possible to effectively pressure-attach a tire structural member on the tire intermediate member 2 rotating in the tire circumferential direction, by rotating the stitching roller 6a.
Further, according to the present embodiment, since the fulcrum portions 4 are movable, it is possible to first set according to the tire size each of the stitching rollers 6a at the initial position thereof where the stitching roller 6a is in contact with the tire intermediate member 2 at an optimum angle and then start a stitching operation.

In our stitching method, it is acceptable that the fulcrum portion 4 and the corresponding stitching portion 6 are both situated on the same side with respect to the tire equatorial plane CL of the tire intermediate member 2 in a stitching operation, as shown in FIG. 3. In this case, the length of the arm 5 needs to be adjusted such that the corresponding stitching roller 6a can be brought into contact in a satisfactory manner with a portion ranging from the radially innermost side to the radially outermost side of a sidewall portion of the tire intermediate member 2.

Further, our stitching method preferably includes a process of moving the two fulcrum portions 4 provided on the same shaft (the shaft 3a of FIGS. 3 and 5), on said shaft. Specifically, these fulcrum portions 4 movable on the shaft 3a are synchronously and symmetrically moved on the shaft 3a (with respect to the tire equatorial plane CL) in the tire width direction of the intermediate member 2 by rotation of the shaft 3a. That is, the fulcrum portions 4 can be moved in the tire width direction of the tire intermediate member 2 by a simple technique.

Yet further, referring to FIG. 6 again, our stitching method preferably includes a process of providing the two fulcrum portions 4 on two different shafts, respectively, and moving the fulcrum portions 4 on these different shafts, respectively. This structure allows the fulcrum portions 4 to move in a wider range in the tire width direction of the tire intermediate member 2 than the structure using a single shaft. It is preferable in our stitching method to make rotations of the two shafts 3a synchronous with each other by using an endless rotating belt 7, as shown in FIG. 6, because then the two fulcrum portions 4 can be moved synchronously and symmetrically in the tire width direction of the intermediate member 2. However, the link between the two shafts 3a via the rotating belt 7 may be released so that only one of the arms 5 is moved or a stitching operation is carried out without synchronizing the two stitching portions. Further alternatively, rotations of the two shafts 3a may be made synchronous with each other by using a gear instead of the rotating belt 7.

Yet further, our stitching method preferably includes a process of moving the fulcrum portions 4 to predetermined tire widthwise positions relative to the tire intermediate member 2 in a predetermined case, to cause the stitching rollers 6a each set at a predetermined position of a surface of a sidewall portion of the tire intermediate member 2, to be pressure-attached against the surface from a direction orthogonal to the surface in a stitching operation.
It is preferable that the fulcrum portions 4 are capable of moving to the predetermined tire widthwise positions relative to the tire intermediate member 2 in a tire having a SUV (sport utility vehicle) size in which a turn-up portion of a sidewall portion is located on the significantly outer side in the tire radial direction, in particular, so that the stitching rollers 6a can be reliably pressure-attached against a surface of a sidewall portion of the tire intermediate member 2 at an angle close to 90° even at a position significantly on the outer side in the tire radial direction of the sidewall therein.

Yet further, our stitching method preferably includes a process of fixing the fulcrum portions 4 at predetermined tire widthwise positions relative to the tire intermediate member 2 in a stitching operation in another predetermined case. A stitching operation in which the fulcrum portions 4 are fixed and the stitching rollers 6a are pressure-attached against a surface of a sidewall portion of the tire intermediate member 2 at an angle somewhat higher/lower than 90° suffices in a tire having a tire size in which a turn-up portion of a sidewall portion is not so significantly on the outer side in the tire radial direction. This structure allowing the fulcrum portions 4 to be fixed contributes to making the whole stitching operation simple.

Yet further, our stitching method preferably includes a process of causing the arm 5 to pivot around the fulcrum 4 by operating the displacement imparting portion (cylinder) 8 provided on the opposite side of the stitching portion 6 with respect to the fulcrum portion 4. In this connection, it is preferable that a length measured from the fulcrum portion 4 to the stitching portion 6, of the arm 5, is longer than a length measured from the fulcrum portion 4 to the displacement imparting portion 8, of the arm 5.
Simply imparting one side of the arm 5 with respect to the fulcrum portion 4, with a small displacement, by the displacement imparting portion 8 significantly displaces the other side of the arm 5 due to a moment. That is, it is possible to cause the arm 5 to make a relatively large pivotal movement on the other side thereof by imparting the one side thereof with a relatively small displacement in the pivotal direction.

Yet further, it is preferable in our stitching method that the arm 5 has a shape curved along the outer contour of the tire intermediate member 2 in a stitching operation. This structure is preferable because it can avoid occurrence of interference between the tire intermediate member 2 and the arm 5, as described above.

Our stitching device and stitching method are not restricted by the foregoing descriptions on the embodiments and various modifications and changes may be made thereto.

### REFERENCE SIGNS LIST

- 1: Stitching device
- 2: Tire intermediate member
- 3: Support
- 3a: Shaft
- 3b: Shaft
- 4: Fulcrum portion
- 5: Arm
- 6: Stitching portion
- 6a: Stitching roller
- 7: Rotating belt
- 8: Displacement imparting portion (Cylinder)
- CL: Tire equatorial plane

## Claims

1. A stitching device (1) for pressure-attaching a tire structural member on a tire intermediate member (2), wherein the device (1) comprises:
a support portion (3) capable of moving in the tire radial direction of the tire intermediate member (2);
a fulcrum portion (4) provided in the support portion (3);
an arm (5) connected at one side thereof with the fulcrum portion (4) to be pivotally movable around the fulcrum portion (4); and
a stitching portion (6) having a stitching jig (6a) and connected with the other side of the arm (5),
wherein the device (1) has two fulcrum portions (4) provided on the same shaft (3a, 3b) and these two fulcrum portions (4) are each movable on said shaft (3a, 3b),
**characterized in that**
one fulcrum portion (4) and one stitching portion (6) associated therewith are positioned on one side and the other side with respect to the tire equatorial plane (CL) of the tire intermediate member (2), respectively, and at the same time the other fulcrum portion (4) and the other stitching portion (6) associated therewith are positioned on the other side and the one side with respect to the tire equatorial plane (CL) of the tire intermediate member (2), respectively.

2. The stitching device (1) of claim 1, wherein one or each fulcrum portion (4) is adapted to be movable to a predetermined tire widthwise position relative to the tire intermediate member (2), to cause the stitching jig (6a) set at a predetermined position of a surface of a sidewall portion of the tire intermediate member (2), to be pressure-attached against the surface from a direction orthogonal to the surface.

3. The stitching device (1) of claim 1or 2, wherein one or each fulcrum portion (4) is fixed at a predetermined tire widthwise position relative to the tire intermediate member (2).

4. The stitching device (1) of any of claims 1 to 3, wherein the device (1) further has at least one displacement imparting portion (8),
the or each displacement imparting portion (8) is provided on the opposite side of the stitching portion (6) with respect to the fulcrum portion (4), and
a length measured from the fulcrum portion (4) to the stitching portion (6), of the arm (5), is longer than a length measured from the fulcrum portion (4) to the displacement imparting portion (8), of the arm (5).

5. The stitching device (1) of any of claims 1 to 4, wherein the arm (5) has a shape curved along an outer contour of the tire intermediate member (2).

6. A stitching method comprising: preparing a support portion (3) capable of moving in the tire radial direction of a tire intermediate member (2), a fulcrum portion (4) provided in the support portion (3), an arm (5) connected at one side thereof with the fulcrum portion (4) to be pivotally movable around the fulcrum portion (4), and a stitching portion (6) having a stitching jig (6a) and connected with the other side of the arm (5); and pressure-attaching a tire structural member on the tire intermediate member (2) by the stitching jig (6a), while moving the support portion (3) in the tire radial direction of the tire intermediate member (2) in a stitching operation,
wherein the method further comprises providing two fulcrum portions (4) on the same shaft (3a, 3b) and moving these two fulcrum portions (4) on said shaft (3a, 3b), and
positioning one fulcrum portion (4) and one stitching portion (6) associated therewith on one side and the other side with respect to the tire equatorial plane (CL) of the tire intermediate member (2), respectively, and at the same time positioning the other fulcrum portion (4) and the other stitching portion (6) associated therewith on the other side and the one side with respect to the tire equatorial plane (CL) of the tire intermediate member (2), respectively.

7. The stitching method of claim 6, further comprising moving one or each fulcrum portion (4) to a predetermined tire widthwise position relative to the tire intermediate member (2), to cause the stitching jig (6a) set at a predetermined position of a surface of a sidewall portion of the tire intermediate member (2), to be pressure-attached against the surface from a direction orthogonal to the surface in the stitching operation.

8. The stitching method of claim 6 or 7, further comprising fixing one or each fulcrum portion (4) at a predetermined tire widthwise position relative to the tire intermediate member (2) in the stitching operation.

9. The stitching method of any of claims 6 to 8, further comprising operating at least one displacement imparting portion (8) provided on the opposite side of the stitching portion (6) with respect to the fulcrum portion (4), to cause the arm (5) to be pivoted around the fulcrum portion (4),
wherein a length measured from the fulcrum portion (4) to the stitching portion (6), of the arm (5), is longer than a length measured from the fulcrum portion (4) to the displacement imparting portion (8), of the arm (5).

10. The stitching method of any of claims 6 to 9, wherein the arm (5) has a shape curved along an outer contour of the tire intermediate member (2).

## Patentansprüche

1. Heftvorrichtung (1) zum Druckbefestigen eines Reifenstrukturelements an einem Reifenzwischenelement (2), wobei die Vorrichtung (1) Folgendes umfasst:
einen Stützabschnitt (3), der dazu in der Lage ist, sich in der Reifenradialrichtung des Reifenzwischenelements (2) zu bewegen,
einen Hebelstützenabschnitt (4), der in dem Stützabschnitt (3) bereitgestellt wird,
einen Arm (5), der an einer Seite desselben mit dem Hebelstützenabschnitt (4) verbunden ist, um schwenkbar um den Hebelstützenabschnitt (4) beweglich zu sein, und
einen Heftabschnitt (6), der eine Heftvorrichtung (6a) aufweist und mit der anderen Seite des Arms (5) verbunden ist,
wobei die Vorrichtung (1) zwei Hebelstützenabschnitte (4) aufweist, die auf der gleichen Welle (3a, 3b) bereitgestellt werden, und diese zwei Hebelstützenabschnitte (4) jeweils auf der Welle (3a, 3b) beweglich sind,
**dadurch gekennzeichnet, dass**
ein Hebelstützenabschnitt (4) und ein mit demselben verknüpfter Heftabschnitt (6) jeweils auf einer Seite beziehungsweise der anderen Seite in Bezug auf die Reifenäquatorialebene (CL) des Reifenzwischenelements (2) angeordnet sind und zur gleichen Zeit der andere Hebelstützenabschnitt (4) und der mit demselben verknüpfte andere Heftabschnitt (6) jeweils auf der anderen Seite beziehungsweise der einen Seite in Bezug auf die Reifenäquatorialebene (CL) des Reifenzwischenelements (2) angeordnet sind.

2. Heftvorrichtung (1) nach Anspruch 1, wobei ein oder jeder Hebelstützenabschnitt (4) dafür eingerichtet ist, zu einer vorbestimmten Reifenbreitenposition im Verhältnis zu dem Reifenzwischenelement (2) beweglich zu sein, um zu veranlassen, dass die Heftvorrichtung (6a), die an einer vorbestimmten Position einer Oberfläche eines Seitenwandabschnitts des Reifenzwischenelements (2) festgesetzt ist, aus einer Richtung, senkrecht zu der Oberfläche, gegen die Oberfläche druckbefestigt wird.

3. Heftvorrichtung (1) nach Anspruch 1 oder 2, wobei der oder jeder Hebelstützenabschnitt (4) an einer vorbestimmten Reifenbreitenposition im Verhältnis zu dem Reifenzwischenelement (2) fixiert ist.

4. Heftvorrichtung (1) nach einem der Ansprüche 1 bis 3, wobei die Vorrichtung (1) ferner wenigstens einen Verschiebungsmitteilungsabschnitt (8) aufweist,
der oder jeder Verschiebungsmitteilungsabschnitt (8) auf der gegenüberliegenden Seite des Heftabschnitts (6) in Bezug auf den Hebelstützenabschnitt (4) bereitgestellt wird und
eine Länge des Arms (5), gemessen von dem Hebelstützenabschnitt (4) zu dem Heftabschnitt (6), länger ist als eine Länge des Arms (5), gemessen von dem Hebelstützenabschnitt (4) zu dem Verschiebungsmitteilungsabschnitt (8).

5. Heftvorrichtung (1) nach einem der Ansprüche 1 bis 4, wobei der Arm (5) eine Form aufweist, die entlang eines äußeren Umrisses des Reifenzwischenelements (2) gekrümmt ist.

6. Heftverfahren, das Folgendes umfasst: Vorbereiten eines Stützabschnitts (3), der dazu in der Lage ist, sich in der Reifenradialrichtung eines Reifenzwischenelements (2) zu bewegen, eines Hebelstützenabschnitts (4), der in dem Stützabschnitt (3) bereitgestellt wird, eines Arms (5), der an einer Seite desselben mit dem Hebelstützenabschnitt (4) verbunden ist, um schwenkbar um den Hebelstützenabschnitt (4) beweglich zu sein, und eines Heftabschnitts (6), der eine Heftvorrichtung (6a) aufweist und mit der anderen Seite des Arms (5) verbunden ist, und Druckbefestigen eines Reifenstrukturelements an dem Reifenzwischenelement (2) durch die Heftvorrichtung (6a), während der Stützabschnitt (3) in einem Heftvorgang in der Reifenradialrichtung des Reifenzwischenelements (2) bewegt wird,
wobei das Verfahren ferner das Bereitstellen von zwei Hebelstützenabschnitten (4) auf der gleichen Welle (3a, 3b) und das Bewegen dieser zwei Hebelstützenabschnitts (4) jeweils auf der Welle (3a, 3b) und
das Anordnen eines Hebelstützenabschnitts (4) und eines mit demselben verknüpften Heftabschnitts (6) jeweils auf einer Seite beziehungsweise der anderen Seite in Bezug auf die Reifenäquatorialebene (CL) des Reifenzwischenelements (2) und zur gleichen Zeit das Anordnen des anderen Hebelstützenabschnitts (4) und des mit demselben verknüpften anderen Heftabschnitts (6) jeweils auf der anderen Seite beziehungsweise der einen Seite in Bezug auf die Reifenäquatorialebene (CL) des Reifenzwischenelements (2) umfasst.

7. Heftverfahren nach Anspruch 6, das ferner das Bewegen des oder jedes Hebelstützenabschnitts (4) zu einer vorbestimmten Reifenbreitenposition im Verhältnis zu dem Reifenzwischenelement (2) umfasst, um zu veranlassen, dass die Heftvorrichtung (6a), die an einer vorbestimmten Position einer Oberfläche eines Seitenwandabschnitts des Reifenzwischenelements (2) festgesetzt ist, in dem Heftvorgang aus einer Richtung, senkrecht zu der Oberfläche, gegen die Oberfläche druckbefestigt wird.

8. Heftverfahren nach Anspruch 6 oder 7, das ferner das Fixieren des oder jedes Hebelstützenabschnitts (4) an einer vorbestimmten Reifenbreitenposition im Verhältnis zu dem Reifenzwischenelement (2) in dem Heftvorgang umfasst.

9. Heftverfahren nach einem der Ansprüche 6 bis 8, das ferner das Betätigen wenigstens eines Verschiebungsmitteilungsabschnitts (8), der auf der gegenüberliegenden Seite des Heftabschnitts (6) in Bezug auf den Hebelstützenabschnitt (4) bereitgestellt wird, umfasst, um zu veranlassen, dass der Arm (5) um den Hebelstützenabschnitt (4) geschwenkt wird,
wobei eine Länge des Arms (5), gemessen von dem Hebelstützenabschnitt (4) zu dem Heftabschnitt (6), länger ist als eine Länge des Arms (5), gemessen von dem Hebelstützenabschnitt (4) zu dem Verschiebungsmitteilungsabschnitt (8).

10. Heftverfahren nach einem der Ansprüche 6 bis 9, wobei der Arm (5) eine Form aufweist, die entlang eines äußeren Umrisses des Reifenzwischenelements (2) gekrümmt ist.

## Revendications

1. Dispositif de rouletage (1) pour fixer par pression un élément structural d'un bandage pneumatique sur un élément intermédiaire du bandage pneumatique (2), le dispositif comprenant :
une partie de support (3) capable de se déplacer dans la direction radiale du bandage pneumatique, de l'élément intermédiaire du bandage pneumatique (2);
une partie de pivot (4) agencée dans la partie de support (3);
un bras (5) connecté au niveau d'un de ses côtés à la partie de pivot (4) en vue d'un déplacement pivotant autour de la partie de pivot (4); et
une partie de rouletage (6) comportant un gabarit de rouletage (6a) et connectée à l'autre côté du bras (5);
dans lequel le dispositif (1) comporte deux parties de pivot (4) agencées sur le même arbre (3a, 3b), ces deux parties de pivot (4) pouvant chacune se déplacer sur ledit arbre (3a, 3b) ; **caractérisé en ce que**:
une partie de pivot (4) et une partie de rouletage (6) qui y est associée sont respectivement positionnées sur un côté et sur l'autre côté, par rapport au plan équatorial du bandage pneumatique (CL) de l'élément intermédiaire du bandage pneumatique (2), l'autre partie de pivot (4) et l'autre partie de rouletage (6) qui y est associée, étant en même temps respectivement positionnées sur l'autre côté et sur ledit un côté, par rapport au plan équatorial du bandage pneumatique (CL) de l'élément intermédiaire du bandage pneumatique (2).

2. Dispositif de rouletage (1) selon la revendication 1, dans lequel une ou chaque partie de pivot (4) est adaptée pour être déplacée vers une position prédéterminée, dans le sens de la largeur du bandage pneumatique, par rapport à l'élément intermédiaire du bandage pneumatique (2), pour entraîner la fixation par pression du gabarit de rouletage (6a), ajusté au niveau d'une position prédéterminée d'une surface d'une partie de flanc de l'élément intermédiaire du bandage pneumatique (2), contre la surface, à partir d'une direction orthogonale à la surface.

3. Dispositif de rouletage (1) selon les revendications 1 ou 2, dans lequel une ou chaque partie de pivot (4) est fixée au niveau d'une position prédéterminée, dans le sens de la largeur du bandage pneumatique, par rapport à l'élément intermédiaire du bandage pneumatique (2).

4. Dispositif de rouletage (1) selon l'une quelconque des revendications 1 à 3, dans lequel le dispositif (1) comporte en outre au moins une partie conférant un déplacement (8);
la ou chaque partie conférant un déplacement (8) étant agencée sur le côté opposé de la partie de rouletage (6) par rapport à la partie de pivot (4) ; et
une longueur mesurée du bras (5) de la partie de pivot (4) vers la partie de rouletage (6) est plus longue qu'une longueur du bras (5) mesurée de la partie de pivot (4) vers la partie conférant un déplacement (8).

5. Dispositif de rouletage (1) selon l'une quelconque des revendications 1 à 4, dans lequel le bras (5) a une forme courbée le long d'un contour externe de l'élément intermédiaire du bandage pneumatique (2).

6. Procédé de rouletage, comprenant les étapes ci-dessous : préparation d'une partie de support (3) capable de se déplacer, dans une direction radiale du bandage pneumatique, d'un élément intermédiaire du bandage pneumatique (2), d'une partie de pivot (4) agencée dans la partie de support (3), d'un bras (5) connecté au niveau d'un de ses côtés à la partie de pivot (4), de sorte à pouvoir être déplacé de manière pivotante autour de la partie de pivot (4), et d'une partie de rouletage (6) comportant un gabarit de rouletage (6a) et connectée à l'autre côté du bras (5) ; et fixation par pression d'un élément structural du bandage pneumatique sur l'élément intermédiaire du bandage pneumatique (2) par l'intermédiaire du gabarit de rouletage (6a), tout en déplaçant la partie de support (3), dans la direction radiale du bandage pneumatique, de l'élément intermédiaire du bandage pneumatique (2) au cours d'une opération de rouletage;
le procédé comprenant en obture les étapes d'agencement de deux parties de pivot (4) sur le même arbre (3a, 3b) et de déplacement de ces deux parties de pivot (4) sur ledit arbre (3a, 3b) ; et
de positionnement respectif d'une partie de pivot (4) et d'une partie de rouletage (6) qui y est associée sur un côté et sur l'autre côté, par rapport au plan équatorial du bande pneumatique (CL), de l'élément intermédiaire du bandage pneumatique (2), et de positionnement respectif, en même temps, de l'autre partie de pivot (4) et de l'autre partie de rouletage (6) qui y est associée, sur l'autre côté et sur ledit un côté, par rapport au plan équatorial du bandage pneumatique (CL), de l'élément intermédiaire du bandage neumatique (2).

7. Procédé de rouletage selon la revendication 6, comprenant en outre l'étape de déplacement d'une ou de chaque partie de pivot (4) vers une position prédéterminée dans le sens de la largeur du bandage pneumatique, par apport à l'élément intermédiaire du bandage pneumatique (2), pour entraîner la fixation par pression du gabarit de rouletage (6a) ajusté au niveau d'une position prédéterminée d'une surface d'une partie de flanc de l'élément intermédiaire du bandage pneumatique (2), contre la surface, à partir d'une direction orthogonale à la surface au cours de l'opération de rouletage.

8. Procédé de rouletage selon les revendications 6 ou 7, comprenant en outre l'étape de fixation d'une ou de chaque partie de pivot (4) au niveau d'une position prédéterminée dans le sens de la largeur de bandage pneumatique, par rapport à l'élément intermédiaire du bandage pneumatique (2) au cours de l'opération de rouletage.

9. Procédé de rouletage selon l'une quelconque des revendications 6 à 8, comprenant en outre l'étape d'actionnement d'au moins une partie conférant un déplacement (8), agencée sur le côté opposé de la partie de rouletage (6), par rapport à la partie de pivot (4), pour entraîner le pivotement du bras (5) autour de la partie de pivot (4);
dans lequel une longueur du bras (5), mesurée de la partie de pivot (4) vers la partie de rouletage (6), du bras, est plus longue qu'une longueur du bras (5) mesurée de la partie de pivot (4) vers la partie conférant un déplacement (8).

10. Procédé de rouletage selon l'une quelconque des revendications 6 à 9, dans lequel le bras (5) a une forme courbée le long d'un contour externe de l'élément intermédiaire du bandage pneumatique (2).
